(19) Europäisches Patentamt
European Patent Office
Office européen des brevets

(11) EP 4 722 326 A1

(12) EUROPEAN PATENT APPLICATION
published in accordance with Art. 153(4) EPC

(43) Date of publication:
**08.04.2026 Bulletin 2026/15**

(21) Application number: **24815531.9**

(22) Date of filing: **29.05.2024**

(51) International Patent Classification (IPC):
***C11D 3/37*** *(2006.01)* ***C08F 216/14*** *(2006.01)*
***C08F 220/12*** *(2006.01)* ***C08F 220/34*** *(2006.01)*
***C08L 33/00*** *(2006.01)* ***C11D 3/386*** *(2006.01)*

(52) Cooperative Patent Classification (CPC):
**C08F 216/14; C08F 220/12; C08F 220/34; C08L 33/00; C11D 3/37; C11D 3/386**

(86) International application number:
**PCT/JP2024/019735**

(87) International publication number:
**WO 2024/248050 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.06.2023 JP 2023091200**
**12.01.2024 JP 2024003132**

(71) Applicant: **Nippon Shokubai Co., Ltd.**
**Osaka-shi, Osaka 541-0043 (JP)**

(72) Inventors:
- **NAGAO, Kazutoshi**
  **Suita-shi, Osaka 564-0034 (JP)**
- **HATTORI, Masami**
  **Suita-shi, Osaka 564-0034 (JP)**
- **OKAYAMA, Yoichi**
  **Suita-shi, Osaka 564-0034 (JP)**

(74) Representative: **Cabinet Beau de Loménie**
**103, rue de Grenelle / CS 90800**
**75340 Paris Cedex 07 (FR)**

# (54) COMPOSITION

(57) The present disclosure aims to provide a composition suitably used for detergents or the like and having excellent cleaning power. The composition of the present disclosure contains an amino group-containing copolymer containing a structural unit (a) derived from an amino group-containing monomer and a structural unit (b) derived from a polyalkylene glycol chain-containing monomer and an enzyme, the structural unit (a) being represented by the following formula (1):

[Chem. 1]

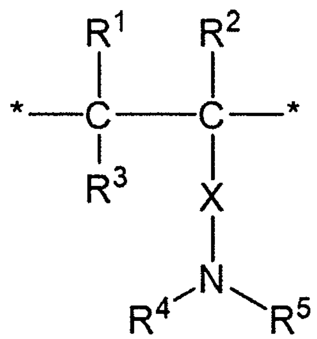

Formula (1)

wherein $R^1$, $R^2$, and $R^3$ each independently represent a hydrogen atom or a C1-C5 alkyl group; $R^4$ and $R^5$ each independently represent a hydrogen atom or a C1-C12 organic group; X represents a divalent linking group; and each of

asterisks represents an atom, in another structural unit, to which the structural unit represented by the formula (1) is bonded, with the another structural unit being the same as or different from the structural unit represented by the formula (1).

## Description

TECHNICAL FIELD

The present disclosure relates to compositions.

BACKGROUND ART

Conventional detergents for clothing have contained detergent builders (detergent additives) such as zeolite, carboxymethyl cellulose, and polyethylene glycol for the purpose of improving the cleaning effects of the detergents.

In addition to such detergent builders, polymers have recently been incorporated into detergent compositions as detergent builders.

Regarding such polymers, polymers in which the main chain is a polyalkyleneimine and alkylene oxides such as ethylene oxide are added to nitrogen atoms in the polyalkyleneimine are also called polyethyleneimine ethoxylate modified products, and can act as polymer builders.

Enzymes have also been commonly used as detergent components. Enzymes in detergents are known to act on protein soils and starch soils and provide excellent cleaning effects. Furthermore, enzymes, when used in combination with polymer builders, are known to exhibit higher cleaning power. For example, Patent Literature 1 discloses the use of a polymer that can improve the cleaning power of a proteolytic enzyme in a detergent, the polymer being an ethoxylated polyethyleneimine.

CITATION LIST

- Patent Literature

Patent Literature 1: CN 109135960 A

SUMMARY OF INVENTION

- Technical Problem

As described above, polymers that can improve the cleaning power of enzymes in detergents have been developed, but there is still room for improvement in the cleaning power of enzymes.

The present disclosure has been made in view of the current state of the art described above and aims to provide a composition with excellent cleaning power.

- Solution to Problem

The present inventors have conducted extensive studies on compositions and have found that a composition containing an enzyme and an amino group-containing copolymer having a structure derived from an amino group-containing monomer and a polyalkylene glycol chain has excellent cleaning power, and have successfully solved the above-mentioned problems and arrived at the present disclosure.

The present disclosure encompasses the following compositions.

(1) A composition containing:

an amino group-containing copolymer containing a structural unit (a) derived from an amino group-containing monomer and a structural unit (b) derived from a polyalkylene glycol chain-containing monomer; and
an enzyme,
the structural unit (a) being represented by the following formula (1):

[Chem. 1]

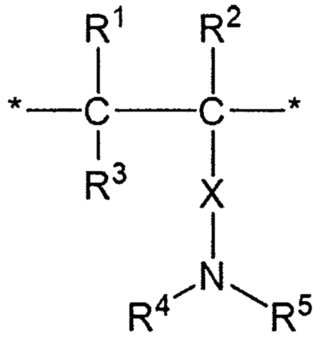

Formula (1)

wherein $R^1$, $R^2$, and $R^3$ each independently represent a hydrogen atom or a C1-C5 alkyl group; $R^4$ and $R^5$ each independently represent a hydrogen atom or a C1-C12 organic group; X represents a divalent linking group; and each of asterisks represents an atom, in another structural unit, to which the structural unit represented by the formula (1) is bonded, with the another structural unit being the same as or different from the structural unit represented by the formula (1).

(2) The composition according to (1), further containing a surfactant.
(3) The composition according to (1) or (2),
wherein the amino group-containing copolymer further contains a structural unit (c) derived from a hydrophobic group-containing monomer.
(4) The composition according to any one of (1) to (3),
wherein the amino acid-containing copolymer further contains a structural unit (d) derived from an unsaturated carboxylic acid.
(5) The composition according to any one of (1) to (4),
wherein the amino group-containing copolymer contains the structural unit (a) in an amount of 2% by mass or more and 50% by mass or less based on 100% by mass of all structural units.
(6) The composition according to any one of (1) to (5),
wherein the amino group-containing copolymer contains the structural unit (b) in an amount of 5% by mass or more and 98% by mass or less based on 100% by mass of all structural units.
(7) The composition according to any one of (1) to (6),
wherein the amino group-containing copolymer contains the structural unit (c) in an amount of 0% by mass or more and 50% by mass or less based on 100% by mass of all structural units.
(8) The composition according to any one of (1) to (7),
wherein the amino group-containing copolymer contains the structural unit (d) in an amount of 0% by mass or more and 20% by mass or less based on 100% by mass of all structural units.
(9) The composition according to any one of (1) to (8),
wherein the amino group-containing copolymer has a weight average molecular weight of 4000 or more and 500000 or less.
(10) The composition according to any one of (1) to (9),
wherein the composition contains the enzyme in a proportion of 0.01 to 10% by mass based on 100% by mass of the composition.
(11) The composition according to any one of (2) to (10),
wherein the surfactant includes at least one of an anionic surfactant or a nonionic surfactant.

- Advantageous Effects of Invention

The composition of the present disclosure having the above-described features has excellent cleaning power, and therefore can be suitably used for detergents or the like.

DESCRIPTION OF EMBODIMENTS

The following description is offered to specifically illustrate preferred embodiments of the present disclosure. It should be noted that the present disclosure is not limited only to these embodiments and the embodiments may be appropriately altered within a range of the gist of the present disclosure. Any combination of two or more of the following

preferred embodiments of the present disclosure is also a preferred embodiment of the present disclosure.

The composition of the present disclosure contains an amino group-containing copolymer (hereinafter also referred to as copolymer in the present disclosure) and an enzyme.

Owing to the inclusion of the copolymer, the composition of the present disclosure can exhibit excellent cleaning power against protein soils.

The proportion of the copolymer in the composition of the present disclosure is preferably, but not limited to, 0.1 to 10% by mass based on 100% by mass of the composition. The proportion is more preferably 0.5 to 5% by mass, still more preferably 0.5 to 3.5% by mass.

The proportion of the enzyme in the composition of the present disclosure is preferably, but not limited to, 0.01 to 10% by mass based on 100% by mass of the composition. The proportion is more preferably 0.02 to 1.0% by mass, still more preferably 0.05 to 0.75% by mass, particularly preferably 0.1 to 0.55% by mass.

In the composition of the present disclosure, the amount of the copolymer is preferably 100 to 10000% by mass per 100% by mass of the enzyme. The amount is more preferably 100 to 5000% by mass, still more preferably 500 to 3500% by mass.

The composition may contain a surfactant in addition to the amino group-containing copolymer and enzyme.

The proportion of the surfactant is preferably, but not limited to, 5 to 80% by mass based on 100% by mass of the composition. The proportion is more preferably 25 to 55% by mass, still more preferably 25 to 40% by mass.

The composition may contain a different component in addition to the amino group-containing copolymer, enzyme, and surfactant. Non-limiting examples of the different component include water; detergent builders; anti-soil agents such as benzotriazole and ethylene-thiourea; soil release agents; color transfer inhibitors; fabric softeners; alkaline substances for pH adjustment; fragrances; solubilizing agents; fluorescent agents; colorants; foaming agents; foam stabilizers; glossing agents; bactericides; bleaching agents; bleach activators; dyes; and solvents. The amount of the different component is preferably, but not limited to, 25 to 75% based on 100% by mass of the composition. The amount is more preferably 30 to 65% by mass.

The essential and optional components contained in the composition of the present disclosure are further described below.

(Amino group-containing copolymer in the present disclosure)

The amino group-containing copolymer contained in the composition of the present disclosure (hereinafter also referred to as copolymer in the present disclosure) has a structural unit (a) derived from an amino group-containing monomer and a structural unit (b) derived from a polyalkylene glycol chain-containing monomer, which are both described below.

A composition containing the copolymer in the present disclosure and an enzyme can be regarded as the composition of the present disclosure. Also, the composition of the present disclosure formulated into a detergent composition further containing a surfactant can exhibit better cleaning power.

<Structural unit (a) derived from amino group-containing monomer>

The structural unit (a) derived from an amino group-containing monomer in the present disclosure is a structural unit represented by the following formula (1):

[Chem. 2]

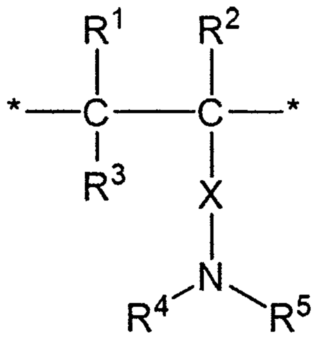

Formula (1)

wherein $R^1$, $R^2$, and $R^3$ each independently represent a hydrogen atom or a C1-C5 alkyl group; $R^4$ and $R^5$ each independently represent a hydrogen atom or a C1-C12 organic group; X represents a divalent linking group; and each of

asterisks represents an atom, in another structural unit, to which the structural unit represented by the formula (1) is bonded, with the another structural unit being the same as or different from the structural unit represented by the formula (1).

In the present disclosure, for example, when the another structural unit is the same as the structural unit represented by the formula (1), the "atom in another structural unit" refers to an atom in another structural unit represented by the formula (1), and when the another structural unit is different from the structural unit represented by the formula (1), the "atom in another structural unit" refers to an atom in a structural unit different from the structural unit represented by the formula (1).

The structural unit derived from an amino group-containing monomer represented by the formula (1) is preferably a structural unit in which -X- is a direct bond, -C(=O)-O-, -C(=O)-, -C(=O)-O-($CH_2$)n- (n is 1 to 5), or -C(=O)-N(-H)-($CH_2$)n-(n is 1 to 5). In particular, -X- is preferably -C(=O)-O-($CH_2$)n-, more preferably one with n being 1 to 3, particularly preferably one with n being 2.

$R^1$, $R^2$, and $R^3$ each independently represent a hydrogen atom or a C1-C5 alkyl group.

Specific examples of the C1-C5 alkyl group include methyl, ethyl, n-propyl, n-butyl, n-pentyl (amyl), i-propyl, sec-butyl, i-butyl, t-butyl, 1-methylbutyl, 1-ethylpropyl, 2-methylbutyl, i-amyl, and neopentyl groups. C1-C3 alkyl groups such as a methyl group, an ethyl group, and a propyl group are preferred, with a methyl group and an ethyl group being more preferred and a methyl group being still more preferred.

Each of $R^1$, $R^2$, and $R^3$ is preferably a hydrogen atom or a methyl group. In a preferred embodiment of the present invention, $R^1$ and $R^2$ are hydrogen atoms and $R^3$ is a methyl group.

$R^4$ and $R^5$ each independently represent a hydrogen atom or a C1-C12 organic group.

Non-limiting examples of the organic group include a hydrocarbon group optionally having a substituent.

The organic group preferably has 1 to 10 carbon atoms, more preferably 1 to 8 carbon atoms, still more preferably 1 to 6 carbon atoms, still further more preferably 1 to 4 carbon atoms, particularly preferably 1 or 2 carbon atoms.

Examples of the hydrocarbon group for the organic group include alkyl, alkenyl, alkynyl, aryl, and aralkyl groups. Of these, an alkyl group is preferred.

Examples of the alkyl group include aliphatic alkyl groups such as methyl, ethyl, n-propyl, n-butyl, n-pentyl (amyl), n-hexyl, n-heptyl, n-octyl, n-nonyl, n-decyl, n-undecyl, n-dodecyl, i-propyl, sec-butyl, i-butyl, t-butyl, 1-methylbutyl, 1-ethylpropyl, 2-methylbutyl, i-amyl, neopentyl, 1,2-dimethylpropyl, 1,1-dimethylpropyl, t-amyl, 1,3-dimethylbutyl, 3,3-dimethylbutyl, 2-ethylbutyl, 2-ethyl-2-methylpropyl, 1-methylheptyl, 2-ethylhexyl, 1,5-dimethylhexyl, and t-octyl groups, and branched nonyl, decyl, undecyl, and dodecyl groups; and alicyclic alkyl groups such as cyclopropyl, cyclopropylmethyl, cyclobutyl, cyclobutylmethyl, cyclopentyl, cyclohexyl, cyclohexylmethyl, cycloheptyl, cyclooctyl, cyclohexylpropyl, cyclododecyl, norbornyl (C7), adamantyl (C10), and cyclopentylethyl groups.

Examples of the alkenyl group include vinyl, allyl, 1-butenyl, 2-butenyl, pentenyl, hexenyl, heptenyl, octenyl, nonenyl, decenyl, and dodecenyl groups.

Examples of the alkynyl group include ethynyl, 1-propynyl, 2-propynyl, butynyl, pentynyl, hexynyl, heptynyl, octynyl, nonynyl, decynyl, and dodecynyl groups.

Examples of the aryl group include phenyl, o-, m- or p-tolyl, 2,3- or 2,4-xylyl, mesityl, and naphthyl groups.

Examples of the aralkyl group include benzyl, phenethyl, and phenylpropyl groups.

The structure derived from an amino group-containing monomer may be formed in any way and can be formed, for example, by radical polymerization of a monomer containing an ethylenically unsaturated group and a primary, secondary, or tertiary amino group represented by the following formula (2) or a group obtained by neutralizing a primary, secondary, or tertiary amino group with an acid.

[Chem. 3]

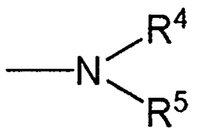

Formula (2)

$R^4$ and $R^5$ in the formula (2) are the same as $R^4$ and $R^5$ in the formula (1), respectively.

The structural unit (a) derived from an amino group-containing monomer is formed, for example, by radical polymerization of an amino group-containing monomer. Specific examples of the amino group-containing monomer include N,N-dialkylamino group-containing (meth)acrylates such as N,N-dimethylaminoethyl (meth)acrylate, N,N-diethylaminoethyl (meth)acrylate, N,N-dimethylaminopropyl (meth)acrylate, and N,N-diethylaminopropyl (meth)acrylate, and products obtained by neutralizing these with an acid such as hydrochloric acid or acetic acid; N,N-dialkylamino group-containing (meth)acrylamides such as N,N-dimethylaminoethyl (meth)acrylamide, N,N-diethylaminoethyl (meth)acrylamide, N,N-dimethylaminopropyl (meth)acrylamide, and N,N-diethylaminopropyl (meth)acrylamide, and products obtained by neutralizing these with an acid such as hydrochloric acid or acetic acid; monoalkylamino group-containing (meth) acrylates such as monomethylaminoethyl (meth)acrylate, monoethylaminoethyl (meth)acrylate, monomethylaminopropyl (meth)acrylate, monoethylaminopropyl (meth)acrylate, and 2-(tert-butylamino)ethyl (meth)acrylate, and products obtained by neutralizing these with an acid such as hydrochloric acid or acetic acid; monoalkylamino group-containing (meth)acrylamides such as monomethylaminoethyl (meth)acrylamide, monoethylaminoethyl (meth)acrylamide, monomethylaminopropyl (meth)acrylamide, and monoethylaminopropyl (meth)acrylamide, and products obtained by neutralizing these with an acid such as hydrochloric acid or acetic acid; esters of (meth)acrylic acid and alkanolamines, such as 2-aminoethyl (meth)acrylate, and products obtained by neutralizing these with an acid such as hydrochloric acid or acetic acid; N,N-diallylmethylamine and a product obtained by neutralizing this with an acid such as hydrochloric acid or acetic acid; allylamine and a product obtained by neutralizing this with an acid such as hydrochloric acid or acetic acid; and products obtained by an addition reaction of C1-C24 amine compounds with unsaturated monomers having a C2-C8 cyclic ether-containing group, such as 1-allyloxy-3-dibutylamino-propan-2-ol and 1-allyloxy-3-diethanolamino-propan-2-ol, and products obtained by neutralizing these with an acid such as hydrochloric acid or acetic acid.

The structural unit (a) derived from an amino group-containing monomer is particularly preferably a structural unit derived from N,N-dimethylaminoethyl (meth)acrylate represented by the following formula (3) or a structural unit derived from a product obtained by neutralizing this with an acid.

[Chem. 4]

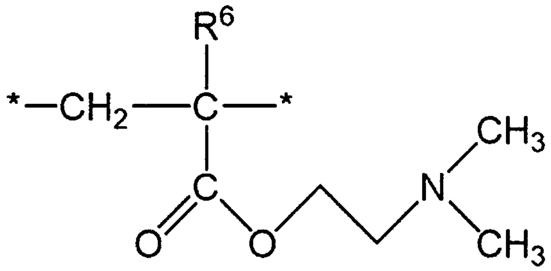

Formula (3)

$R^6$ in the formula (3) represents a hydrogen atom or a methyl group. Each of asterisks represents an atom, in another structural unit, to which the structural unit represented by the formula (3) is bonded, with the another structural unit being the same as or different from the structural unit represented by the formula (3). The structural unit (a) is most preferably a structural unit derived from N,N-dimethylaminoethyl methacrylate or a structural unit derived from a product obtained by neutralizing this with an acid.

The amount of the structural unit (a) derived from an amino group-containing monomer in the copolymer in the present disclosure is 2% by mass or more and 50% by mass or less, preferably 3% by mass or more and 45% by mass or less, more preferably 4% by mass or more and 40% by mass or less, particularly preferably 5% by mass or more and 30% by mass or less, based on 100% by mass of structural units derived from all the monomers constituting the copolymer in the present disclosure (hereinafter also referred to as all structural units).

In one embodiment, the amount of the structural unit (a) may be 5% by mass or more and 50% by mass or less, 7% by mass or more and 45% by mass or less, 8% by mass or more and 40% by mass or less, particularly preferably 10% by mass or more and 30% by mass or less.

In a preferred embodiment of the present disclosure, the amount of the structural unit (a) is 15% by mass or more and 25% by mass or less.

When the amount of the structural unit (a) is within the ranges described above, the copolymer can have an appropriate proportion of cationic sites. Thus, the composition of the present disclosure, when used as a detergent composition, tends to exhibit improved cleaning power.

<Structural unit (b) derived from polyalkylene glycol chain-containing monomer>

The structural unit (b) derived from a polyalkylene glycol chain-containing monomer in the present disclosure has a polyalkylene glycol chain in the structure. The structural unit (b) is represented, for example, by the following formula (4):

[Chem. 5]

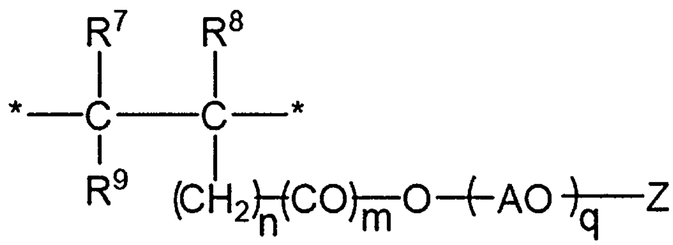

Formula (4)

wherein $R^7$, $R^8$, and $R^9$ each independently represent a hydrogen atom or a C1-C5 alkyl group optionally having a substituent; Z represents a hydrogen atom, a C1-C30 hydrocarbon group, a hydroxy group, a carboxyl group, a sulfonic acid group, a phosphoric acid group, an amino group, or a salt thereof; A represents a C1-C10 alkylene group optionally having a substituent; q represents the average number of moles of (AO) added and is a number of 1 to 200; n represents a number of 0 to 4; and m represents 0 or 1.

$R^7$, $R^8$, and $R^9$ each independently represent a hydrogen atom or a C1-C5 alkyl group optionally having a substituent. The substituent is preferably at least one hydrophilic group selected from the group consisting of a hydroxy group, a carboxyl group, a sulfonic acid group, a phosphoric acid group, an amino group, and groups of salts thereof.

The alkyl group is preferably a methyl group, an ethyl group, or a propyl group, more preferably a methyl group or an ethyl group, still more preferably a methyl group.

Preferably, $R^7$, $R^8$, and $R^9$ each independently represent a hydrogen atom or a methyl group. More preferably, $R^7$ and $R^9$ are hydrogen atoms and $R^8$ is a hydrogen atom or a methyl group. Still more preferably, $R^7$ and $R^9$ are hydrogen atoms and $R^8$ is a methyl group.

Z represents a hydrogen atom, a C1-C30 hydrocarbon group, a hydroxy group, a carboxyl group, a sulfonic acid group, a phosphoric acid group, an amino group, or a salt thereof. Non-limiting examples of the hydrocarbon group include chain hydrocarbon groups such as an alkyl group, an alkenyl group, and an alkynyl group, and cyclic hydrocarbon groups such as an aryl group, an aralkyl group, a cycloalkyl group, and a cycloalkenyl group. The hydrocarbon group may have a branch. When the hydrocarbon group has a branch, the number of carbon atoms thereof refers to a total number of carbon atoms in the main chain and branches.

Examples of the alkyl group include ethyl, propyl, isopropyl, butyl, isobutyl, hexyl, heptyl, 2-ethylhexyl, octyl, nonyl, decyl, dodecyl, stearyl, and icosyl groups.

Examples of the alkenyl group include vinyl, allyl, 1-butenyl, 2-butenyl, pentenyl, hexenyl, heptenyl, octenyl, nonenyl, decenyl, dodecenyl, octadecenyl, and icosenyl groups. Examples of the alkynyl group include ethynyl, 1-propynyl, 2-propynyl, butynyl, pentynyl, hexynyl, heptynyl, octynyl, nonynyl, decynyl, dodecynyl, octadecynyl, and icosynyl groups.

Examples of the aryl group include phenyl, methylphenyl, 1-methoxy-4-methylphenyl, ethylphenyl, propylphenyl, butylphenyl, butylmethylphenyl, dimethylphenyl, diethylphenyl, dibutylphenyl, biphenyl, and naphthyl groups.

Examples of the aralkyl group include benzyl, phenethyl, phenylpropyl, benzhydryl, biphenylmethyl, biphenylethyl, naphthylmethyl, and naphthylethyl groups.

Examples of the cycloalkyl group include cyclopropyl, cyclobutyl, cyclopentyl, and cyclohexyl groups. Examples of the cycloalkenyl group include cyclopropenyl, cyclobutenyl, cyclopentenyl, and cyclohexenyl groups.

The hydrocarbon group is preferably an alkyl group or an alkenyl group, more preferably an alkyl group. The number of carbon atoms of the hydrocarbon group is preferably 2 to 20, more preferably 2 to 15, still more preferably 2 to 10, particularly preferably 2 to 5.

Z is preferably a hydrogen atom or a methyl group.

A represents a C1-C10 alkylene group optionally having a substituent. The substituent is preferably at least one hydrophilic group selected from the group consisting of a hydroxy group, a carboxyl group, a sulfonic acid group, a phosphoric acid group, a secondary or tertiary amino group, and groups of salts thereof.

In the polyalkylene glycol represented by (AO)q, the q oxyalkylene groups each represented by AO may be the same as or different from each other.

The number of carbon atoms of the alkylene group for A is preferably 2 to 10, more preferably 2 to 4.

Examples of the oxyalkylene group represented by AO include oxyethylene, oxypropylene, oxybutylene, oxyisobutylene, oxy-2,3-butylene, oxystyrene, and C2-C10 oxyalkylene groups. C2-C4 oxyalkylene groups such as an oxyethylene group, an oxypropylene group, and an oxybutylene group are more preferred, and an oxyethylene group and an oxypropylene group are still more preferred. The oxyalkylene group represented by AO is not limited to groups formed by an addition reaction of an alkylene oxide. When the polyalkylene glycol is an adduct of two or more oxyalkylene groups, the oxyalkylene groups may be added in random, block, alternating, or another form. The oxyalkylene groups in

the polyalkylene glycol preferably include an oxyethylene group as an essential component. More preferably, 50 mol% or more of the oxyalkylene groups are oxyethylene groups, and still more preferably, 90 mol% or more of the oxyalkylene groups are oxyethylene groups.

The symbol q represents the average number of moles of AO added and is a number from 1 to 200. The symbol q is preferably 1 to 180, more preferably 2 to 150, still more preferably 2 to 100, further more preferably 2 to 80, particularly preferably 2 to 50, most preferably 20 to 30.

In one embodiment, q is preferably 2 to 180, more preferably 3 to 150, still more preferably 4 to 100, further more preferably 5 to 80, particularly preferably 9 to 50.

The symbol n represents a number from 0 to 4, and m represents 0 or 1.

The symbol n is preferably 0 to 3, more preferably 0 to 2, still more preferably 0. The symbol m is more preferably 1.

The structural unit (b) having a polyalkylene glycol chain is formed, for example, by radical polymerization of a polyalkylene glycol chain-containing monomer.

Specific preferred examples of the polyalkylene glycol chain-containing monomer include (poly)alkylene glycol monomers including: polyalkylene glycol mono(meth)acrylates such as (poly)ethylene glycol mono(meth)acrylate and (poly)propylene glycol mono(meth)acrylate; alkoxy polyalkylene glycol mono(meth)acrylates such as methoxy(poly)ethylene glycol mono(meth)acrylate and methoxy(poly)propylene glycol mono(meth)acrylate; and compounds in which 10 to 100 mol of oxyalkylene groups are added to any of vinyl alcohol, (meth)allyl alcohol, 3-methyl-3-buten-1-ol (isoprenol), 3-methyl-2-buten-1-ol, 2-methyl-3-buten-2-ol, 2-methyl-2-buten-1-ol, and 2-methyl-3-buten-1-ol. In particular, (poly)ethylene glycol mono(meth)acrylate and methoxy(poly)ethylene glycol mono(meth)acrylate are preferred.

The amount of the structural unit (b) having a polyalkylene glycol chain in the copolymer in the present disclosure is preferably 5% by mass or more and 98% by mass or less, more preferably 20% by mass or more and 95% by mass or less, still more preferably 30% by mass or more and 90% by mass or less, particularly preferably 40% by mass or more and 85% by mass or less, most preferably 45% by mass or more and 80% by mass or less, based on 100% by mass of structural units derived from all the monomers constituting the copolymer in the present disclosure.

When the amount of the structural unit (b) is within the ranges described above, the copolymer can have an appropriate proportion of hydrophilic sites. Thus, the composition of the present disclosure, when used as a detergent composition, tends to exhibit improved cleaning power.

In one embodiment, the amount of the structural unit (b) may be 5% by mass or more and 95% by mass or less, 20% by mass or more and 80% by mass or less, 30% by mass or more and 70% by mass or less, 40% by mass or more and 65% by mass or less, or 45% by mass or more and 60% by mass or less.

In one embodiment, the amount of the structural unit (b) may be 50% by mass or more.

<Structural unit (c) derived from hydrophobic monomer>

The copolymer in the present disclosure may have a structural unit (c) derived from a hydrophobic monomer as a structural unit different from the structural unit (a) derived from an amino group-containing monomer and the structural unit (b) derived from a polyalkylene glycol chain-containing monomer.

The hydrophobic monomer in the present disclosure constituting the structural unit (c) derived from a hydrophobic monomer in the present disclosure is not limited as long as a homopolymer obtained by homopolymerization of the hydrophobic monomer has a solubility parameter of 13 or less.

The solubility parameter is a value calculated by the method described in "POLYMER ENGINEERING AND SCIENCE" (Vol. 14, No. 2, pp. 147-154, 1974).

The method is outlined below. The solubility parameter (δ) $(cal/cm^3)^{1/2}$ of a homopolymer is calculated by the following calculation method based on the evaporation energy (Δei) and molar volume (Δvi) of the structural unit forming the polymer.

$$\delta = (\Delta ei/\Delta vi)^{1/2} \quad (cal/cm^3)^{1/2}$$

When the solubility parameter of the homopolymer obtained by homopolymerization of the hydrophobic monomer in the present disclosure is 13 or less, the copolymer in the present disclosure exhibits sufficient hydrophobicity and excellently adsorbs onto hydrophobic textiles. The solubility parameter is preferably 12 or less, more preferably 11 or less. The solubility parameter is usually 5 or more.

The hydrophobic monomer in the present disclosure is not limited as long as the homopolymer thereof has a solubility parameter of 13 or less, and is preferably a monomer having an ethylenically unsaturated group and a C1-C30 alkyl group.

Examples of the hydrophobic monomer include esters of unsaturated carboxylic acids such as (meth)acrylic acid

and C1-C30 alcohols optionally having a substituent; aromatic vinyl monomers such as styrene; olefin monomers such as ethylene and propylene; esters of unsaturated alcohols and C3-C8 carboxylic acids such as vinyl acetate; vinyl halides such as vinyl chloride; alkyl vinyl ethers such as methyl vinyl ether and ethyl vinyl ether; cyclic vinyl monomers such as N-vinylpyrrolidone; and acrylonitrile.

The substituent that is optionally contained in each of the alcohols may be any substituent different from a hydroxy group, an oxyalkylene group, a carboxyl group, a sulfonic acid group, a phosphoric acid group, an amino group, and groups of salts thereof. Examples of the substituent include halogen atoms.

The number of carbon atoms of the alcohol is preferably 2 to 22, more preferably 2 to 16, still more preferably 4 to 8.

Preferred examples of the C1-C30 alcohols include C1-C30 alkyl alcohols and C6-C30 aromatic alcohols.

Examples of the C1-C30 alkyl alcohols include methanol, ethanol, propanol, butanol, pentyl alcohol, hexyl alcohol, heptyl alcohol, octyl alcohol, nonyl alcohol, decyl alcohol, undecyl alcohol, dodecyl alcohol (lauryl alcohol), tridecyl alcohol, tetradecyl alcohol, pentadecyl alcohol, hexadecyl alcohol, heptadecyl alcohol, octadecyl alcohol, nonadecyl alcohol, and icosyl alcohol.

Preferred examples of the C6-C30 aromatic alcohols include phenol, benzyl alcohol, methylphenols (o-cresol, m-cresol, and p-cresol), creosol, ethylphenyl alcohol, propylphenyl alcohol, butylphenyl alcohol, butylmethylphenyl alcohol, dimethylphenyl alcohol, diethylphenyl alcohol, dibutylphenyl alcohol, hydroxybiphenyl, 4-hydroxymethylbiphenyl, 3-hydroxymethylbiphenyl, 4-hydroxyethylbiphenyl, 3-hydroxyethylbiphenyl, naphthol, 1-hydroxymethylnaphthalene, 1-hydroxyethylnaphthalene, 2-hydroxymethylnaphthalene, and 2-hydroxyethylnaphthalene.

The hydrophobic monomer is preferably a compound represented by the following formula (5):

[Chem. 6]

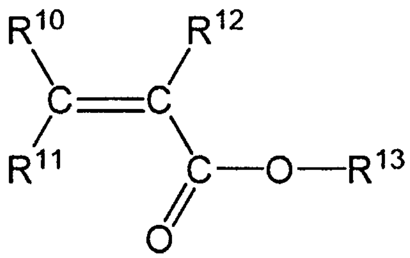

Formula (5)

wherein $R^{10}$, $R^{11}$, and $R^{12}$ are the same as or different from each other and each represent a hydrogen atom or a C1-C3 alkyl group; and $R^{13}$ represents a C1-C30 hydrocarbon group.

In other words, the structural unit (c) derived from a hydrophobic monomer in the present disclosure is preferably a structural unit represented by the following formula (6):

[Chem. 7]

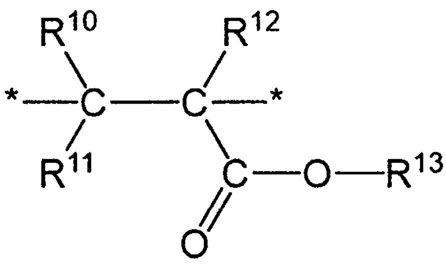

Formula (6)

wherein $R^{10}$ to $R^{13}$ are the same as those in the formula (5); and each of asterisks represents an atom, in another structural unit, to which the structural unit represented by the formula (6) is bonded, with the another structural unit being the same as or different from the structural unit represented by the formula (6).

When the amino group-containing copolymer in the present disclosure contains a structural unit represented by the formula (6), the structural unit may be obtained by polymerization using a compound represented by the formula (5) or may be obtained by other methods.

The alkyl group for $R^{10}$, $R^{11}$, and $R^{12}$ is preferably a methyl group, an ethyl group, or a propyl group, more preferably a methyl group or an ethyl group, still more preferably a methyl group.

$R^{10}$, $R^{11}$ and $R^{12}$ are the same as or different from each other and are each preferably a hydrogen atom or a methyl group. More preferably, $R^{10}$ and $R^{11}$ are hydrogen atoms and $R^{12}$ is a hydrogen atom or a methyl group.

The number of carbon atoms of the hydrocarbon group for $R^{13}$ is preferably 1 to 22. It is more preferably 2 to 16, still more preferably 2 to 12, particularly preferably 4 to 12, most preferably 4 to 8.

Non-limiting examples of the hydrocarbon group for $R^{13}$ include chain hydrocarbon groups such as an alkyl group, an alkenyl group, and an alkynyl group, and cyclic hydrocarbon groups such as an aromatic group, a cycloalkyl group, and a cycloalkenyl group. The hydrocarbon group may have a branch. When the hydrocarbon group has a branch, the number of carbon atoms thereof refers to a total number of carbon atoms in the main chain and branches.

In one embodiment, the hydrocarbon group for $R^{13}$ may or may not have an aromatic group. In a preferred embodiment of the present disclosure, $R^{13}$ is a hydrocarbon group having no aromatic group.

The number of carbon atoms of the alkyl group for $R^{13}$ is preferably 2 to 22, more preferably 2 to 16, still more preferably 2 to 12. The number is most preferably 4 to 8.

The number of carbon atoms of the aromatic group for $R^{13}$ is preferably 6 to 12, more preferably 6 to 10, particularly preferably 6 to 8.

Examples of the alkyl group for $R^{13}$ include methyl, ethyl, propyl, isopropyl, butyl, isobutyl, hexyl, heptyl, 2-ethylhexyl, octyl, nonyl, decyl, dodecyl, stearyl, and icosyl groups.

Examples of the alkenyl group for $R^{13}$ include vinyl, allyl, 1-butenyl, 2-butenyl, pentenyl, hexenyl, heptenyl, octenyl, nonenyl, decenyl, dodecenyl, octadecenyl, and icosenyl groups.

Examples of the alkynyl group for $R^{13}$ include ethynyl, 1-propynyl, 2-propynyl, butynyl, pentynyl, hexynyl, heptynyl, octynyl, nonynyl, decynyl, dodecynyl, octadecynyl, and icosynyl groups.

Examples of the aromatic group for $R^{13}$ include aryl groups such as phenyl, benzyl, methylphenyl, 1-methoxy-4-methylphenyl, ethylphenyl, propylphenyl, butylphenyl, butylmethylphenyl, dimethylphenyl, diethylphenyl, dibutylphenyl, biphenyl, and naphthyl groups; and aralkyl groups such as benzyl, 4-methylbenzyl, phenylethyl, phenylpropyl, phenylbutyl, 2-(2-methylphenyl)ethyl, 2-(3-methylphenyl)ethyl, 2-(4-methylphenyl)ethyl, 2-(4-propylphenyl)ethyl, biphenylmethyl, biphenylethyl, naphthylmethyl, and naphthylethyl groups.

Examples of the cycloalkyl group for $R^{13}$ include cyclopropyl, cyclobutyl, cyclopentyl, and cyclohexyl groups.

Examples of the cycloalkenyl group include cyclopropenyl, cyclobutenyl, cyclopentenyl, and cyclohexenyl groups.

The hydrocarbon group for $R^{13}$ is preferably an alkyl group, an aryl group, or an aralkyl group, more preferably an alkyl group.

The hydrophobic monomer is preferably an alkyl (meth)acrylate, an aryl (meth)acrylate, or an aralkyl (meth) acrylate, more preferably an alkyl (meth)acrylate.

Examples of the alkyl (meth)acrylate include methyl (meth)acrylate, ethyl (meth)acrylate, n-propyl (meth) acrylate, isopropyl (meth)acrylate, n-butyl (meth)acrylate, isobutyl (meth)acrylate, tert-butyl (meth)acrylate, sec-butyl (meth)acrylate, 2-ethylhexyl (meth)acrylate, cyclohexyl (meth)acrylate, n-octyl (meth)acrylate, nonyl (meth)acrylate, decyl (meth)acrylate, dodecyl (meth)acrylate, stearyl (meth)acrylate, and icosyl (meth)acrylate. Of these, methyl (meth) acrylate, ethyl (meth)acrylate, n-propyl (meth)acrylate, isopropyl (meth)acrylate, n-butyl (meth)acrylate, isobutyl (meth) acrylate, tert-butyl (meth)acrylate, sec-butyl (meth)acrylate, 2-ethylhexyl (meth)acrylate, cyclohexyl (meth)acrylate, n-octyl (meth)acrylate, and dodecyl (meth)acrylate are preferred, and ethyl (meth)acrylate, n-propyl (meth)acrylate, isopropyl (meth)acrylate, n-butyl (meth)acrylate, isobutyl (meth)acrylate, tert-butyl (meth)acrylate, sec-butyl (meth) acrylate, 2-ethylhexyl (meth)acrylate, cyclohexyl (meth)acrylate, and dodecyl (meth)acrylate are more preferred.

Examples of the aryl (meth)acrylate include phenyl (meth)acrylate, 2-ethylphenyl (meth)acrylate, propylphenyl (meth)acrylate, butylphenyl (meth)acrylate, pentylphenyl (meth)acrylate, hexylphenyl (meth)acrylate, butylmethylphenyl (meth)acrylate, dimethylphenyl (meth)acrylate, diethylphenyl (meth)acrylate, dibutylphenyl (meth)acrylate, 4-methylphenyl (meth)acrylate, 1-methoxy-4-methylphenyl (meth)acrylate, and naphthyl (meth)acrylate. Of these, phenyl (meth) acrylate is preferred.

Examples of the aralkyl (meth)acrylate include benzyl (meth)acrylate, 2-phenylethyl (meth)acrylate, 3-phenylpropyl (meth)acrylate, 4-phenylbutyl (meth)acrylate, 4-methylbenzyl (meth)acrylate, 2-(2-methylphenyl)ethyl (meth) acrylate, 2-(3-methylphenyl)ethyl (meth)acrylate, 2-(4-methylphenyl)ethyl (meth)acrylate, 2-(4-propylphenyl)ethyl (meth)acrylate, biphenylmethyl (meth)acrylate, biphenylethyl (meth)acrylate, naphthylmethyl (meth)acrylate, and

naphthylethyl (meth)acrylate.

Of these, benzyl (meth)acrylate is preferred.

The amount of the structural unit (c) derived from a hydrophobic monomer in the copolymer in the present disclosure is preferably 0% by mass or more and 50% by mass or less, more preferably 0% by mass or more and 40% by mass or less, still more preferably 0% by mass or more and 35% by mass or less, still further more preferably 0% by mass or more and 30% by mass or less, particularly preferably 0% by mass or more and 25% by mass or less, most preferably 0% by mass or more and 20% by mass or less, based on 100% by mass of structural units derived from all the monomers constituting the copolymer in the present disclosure. When the amount of the structural unit (c) is within the ranges described above, the copolymer can have an appropriate proportion of hydrophobic sites. Thus, the composition of the present disclosure, when used as a detergent composition, tends to exhibit improved cleaning power.

In one embodiment, the amount of the structural unit (c) may be 5% by mass or more and 70% by mass or less, 10% by mass or more and 60% by mass or less, 15% by mass or more and 50% by mass or less, or 20% by mass or more and 45% by mass or less.

<Structural unit (d) derived from unsaturated carboxylic acid monomer>

The copolymer in the present disclosure may have a structural unit (d) derived from an unsaturated carboxylic acid monomer as a structural unit different from the structural unit (a) derived from an amino group-containing monomer and the structural unit (b) derived from a polyalkylene glycol chain-containing monomer.

In a preferred embodiment of the present invention, the copolymer in the present disclosure has the structural units (a), (b), and (d).

The structural unit (d) derived from an unsaturated carboxylic acid monomer in the present disclosure is not limited as long as it is a structural unit derived from a monomer having a carboxyl group or a salt thereof and an ethylenically unsaturated hydrocarbon group (unsaturated group). The structural unit (d) is preferably a structural unit represented by the following formula (7) or a salt thereof:

[Chem. 8]

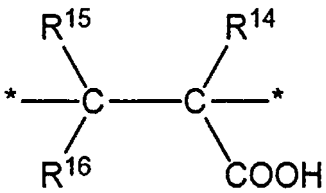

Formula (7)

wherein $R^{14}$ is at least one selected from a hydrogen atom, a methyl group, and a - $CH_2COOH$ group; and $R^{15}$ and $R^{16}$ are the same as or different from each other and are each at least one selected from a hydrogen atom, a methyl group, an ethyl group, a carboxyl group, and a -$CH_2COOH$ group.

In a preferred embodiment of the formula (7), $R^{14}$ is at least one selected from a hydrogen atom and a methyl group, and $R^{15}$ and $R^{16}$ are the same as or different from each other and are each at least one selected from a hydrogen atom and a carboxyl group.

In a more preferred embodiment, $R^{14}$ is at least one selected from a hydrogen atom and a methyl group and $R^{15}$ and $R^{16}$ are hydrogen atoms.

Examples of the unsaturated carboxylic acid monomer as a precursor of the structural unit (d) derived from an unsaturated carboxylic acid monomer before the polymerization reaction include unsaturated carboxylic acid monomers including acids such as (meth)acrylic acid, crotonic acid, tiglic acid, 3-methylcrotonic acid, and 2-methyl-2-pentenoic acid, and monovalent metal salts, divalent metal salts, ammonium salts, and organic amine salts of these acids; and unsaturated dicarboxylic acid monomers including acids such as maleic acid, itaconic acid, mesaconic acid, citraconic acid, and fumaric acid, monovalent metal salts, divalent metal salts, ammonium salts, and organic amine salts of these acids, and anhydrides and half esters of these acids. Of these, a (meth)acrylic acid, maleic acid, and salts thereof are preferred, and a (meth)acrylic acid is more preferred.

The amount of the structural unit (d) derived from an unsaturated carboxylic acid monomer in the copolymer in the present disclosure is preferably 0% by mass or more and 20% by mass or less, more preferably 0% by mass or more and 15% by mass or less, still more preferably 0% by mass or more and 10% by mass or less, particularly preferably 0% by mass or more and 5% by mass or less, based on 100% by mass of structural units derived from all the monomers constituting the copolymer in the present disclosure.

When the amount of the structural unit (d) is within the ranges described above, the copolymer can have an appropriate proportion of hydrophobic sites and an appropriate proportion of hydrophilic sites. Thus, the composition of the

present disclosure, when used as a detergent composition, tends to exhibit improved cleaning power.

In one embodiment, the amount of the structural unit (d) may be 1% by mass or more and 20% by mass or less, 1% by mass or more and 10% by mass or less, or 1% by mass or more and 5% by mass or less.

<Structural unit (e) derived from different monomer>

The amino group-containing copolymer in the present disclosure may have a structural unit (e) derived from a different monomer other than the structural unit (a) derived from an amino group-containing monomer, the structural unit (b) derived from a polyalkylene glycol chain-containing monomer, the structural unit (c) derived from a hydrophobic monomer, and the structural unit (d) derived from an unsaturated carboxylic acid monomer.

Non-limiting examples of the different monomer include sulfonic acid group-containing monomers such as styrenesulfonic acid, 2-acrylamido-2-methylpropane sulfonic acid, and 3-allyloxy-2-hydroxy-1-propane sulfonic acid, and salts thereof, and phosphoric acid group-containing monomers such as 2-methacryloyloxyethyl acid phosphate.

The amount of the structural unit derived from a different monomer in the copolymer in the present disclosure is preferably 10% by mass or less, more preferably 5% by mass or less, particularly preferably 3% by mass or less, most preferably 1% by mass or less, based on 100% by mass of structural units derived from all the monomers constituting the copolymer in the present disclosure. In a preferred embodiment of the present invention, the amount of the structural unit derived from a different monomer is 0% by mass.

<Properties and the like of copolymer in the present disclosure>

The amino group-containing copolymer in the present disclosure preferably has a weight average molecular weight (Mw) of 4000 or more and 500000 or less, more preferably 6000 or more and 400000 or less, still more preferably 10000 or more and 300000 or less. Further, the Mw is preferably 10000 or more and 200000 or less, more preferably 10000 or more and 100000 or less, still more preferably 12000 or more and 50000 or less, particularly preferably 15000 or more and 40000 or less, most preferably 16000 or more and 30000 or less.

When the copolymer has a Mw within the ranges described above, the composition of the present disclosure, when used as a detergent composition, tends to exhibit improved cleaning power.

The weight average molecular weight of the amino group-containing copolymer may be measured by the method described in the Examples.

<Method for producing amino group-containing copolymer in the present disclosure>

The amino group-containing copolymer in the present disclosure may be produced by any method, and can be produced by polymerizing monomer components. Specific examples and preferred examples of the monomer components and the preferred proportions of the monomers are as described above.

The method for producing the amino group-containing copolymer includes, for example, polymerizing an amino group-containing monomer or a precursor thereof, a polyalkylene glycol chain-containing monomer or a precursor thereof, a hydrophobic group monomer or a precursor thereof, and an unsaturated carboxylic acid monomer (hereinafter referred to as a polymerization step). Examples of a method for initiating polymerization of the monomer components in the polymerization step include a method of adding a polymerization initiator, a method of applying UV light, a method of applying heat, and a method of applying light in the presence of a photopolymerization initiator. In particular, a polymerization initiator is preferably used.

Examples of the polymerization initiator include persulfates such as sodium persulfate, potassium persulfate, and ammonium persulfate; azo compounds such as 2,2'-azobis(2,4-dimethylvaleronitrile), dimethyl-2,2'-azobis(2-methylpropionate), 2,2'-azobis(isobutyronitrile), and 2,2'-azobis(2-methylpropionamidine) dihydrochloride; organic peroxides such as benzoyl peroxide, lauroyl peroxide, di-t-butyl peroxide, and cumene hydroperoxide; and redox initiators that generate radicals by combining an oxidizing agent and a reducing agent, such as a combination of ascorbic acid and hydrogen peroxide and a combination of a persulfate and a metal salt. Of these, persulfates and azo compounds are preferred, as they tend to reduce the amount of residual monomer. Azo compounds are more preferred. Each of these polymerization initiators may be used alone or two or more of these may be used in the form of a mixture.

The amount of the polymerization initiator used is preferably 0.01% by mass or more and 10% by mass or less, more preferably 0.02% by mass or more and 8% by mass or less, still more preferably 0.03% by mass or more and 7% by mass or less, most preferably 0.04% by mass or more and 4% by mass or less, relative to the total amount of monomers used constituting the structural units.

In the polymerization step, a chain transfer agent may optionally be used as a molecular weight regulator for the polymer. Examples of the chain transfer agent include mercaptocarboxylic acids such as thioglycolic acid (mercaptoacetic acid), 3-mercaptopropionic acid, 2-mercaptopropionic acid (thiolactic acid), 4-mercaptobutanoic acid, thiomalic acid, and

salts thereof; other mercapto compounds such as mercaptoethanol, thioglycerol, and 2-mercaptoethanesulfonic acid; halides such as carbon tetrachloride, methylene chloride, bromoform, and bromotrichloroethane; secondary alcohols such as isopropanol and glycerol; phosphorous acid, hypophosphorous acid, hypophosphites, and hydrates thereof; and hydrogen sulfite (salt) and compounds capable of generating hydrogen sulfite (salt) (bisulfurous acid (salt), pyrosulfurous acid (salt), dithionous acid (salt), sulfurous acid (salt), etc.). Of these, compounds having a mercapto group are preferred, and mercapto group-containing compounds having a carboxyl group are more preferred.

The amount of the chain transfer agent used in the production of the copolymer in the present disclosure is preferably 0.1 mol% or more and 20 mol% or less, more preferably 0.2 mol% or more and 15 mol% or less, still more preferably 0.3 mol% or more and 10 mol% or less, most preferably 0.5 mol% or more and 5 mol% or less, per 100 mol% of the total amount of monomers used constituting the structural units.

The solvent used in the polymerization can be selected depending on needs from those capable of dissolving the monomer components, polymerization initiator, chain transfer agent, to be used, and the copolymer produced. The solvent may be any solvent, and is preferably water; a C1-C8 alcohol such as ethanol, 1-propanol, 2-propanol, 1-butanol, or phenoxyethanol; a glycol such as ethylene glycol, propylene glycol, butylene glycol, or hexylene glycol; or a glycol ether such as diethylene glycol monoethyl ether, diethylene glycol monobutyl ether, or propylene glycol monomethyl ether. Of these, water, ethanol, ethylene glycol, propylene glycol, diethylene glycol monobutyl ether, and propylene glycol monomethyl ether are preferred, and a mixture of two or more of these may also be used.

In the polymerization step, the polymerization temperature is preferably 40°C or higher and 150°C or lower. The polymerization temperature is more preferably 45°C or higher, still more preferably 50°C or higher. The polymerization temperature is more preferably 100°C or lower, still more preferably 90°C or lower.

In the polymerization step, the monomer components, the polymerization initiator, and the chain transfer agent may be introduced into a reaction vessel by any method. Examples thereof include a method of introducing the entire amount of these into the reaction vessel all at once at the beginning, a method of introducing the entire amount of these into the reaction vessel in portions or continuously, and a method of introducing a portion of these into the reaction vessel at the beginning followed by introducing the rest into the reaction vessel in portions or continuously. A preferred method is a method of introducing any of the solvents described later at the beginning followed by continuously introducing the monomer components, the polymerization initiator, and the chain transfer agent.

The monomer components may be neutralized with an organic acid such as acetic acid or propionic acid, or a mineral acid such as hydrochloric acid, sulfuric acid, or nitric acid before polymerization.

The copolymer obtained by the polymerization can be used as a detergent additive such as an additive for liquid detergents. The copolymer may be further neutralized with an alkaline substance before use, if necessary. The alkaline substance used may be a hydroxide of a monovalent metal or a divalent metal, an inorganic salt such as a carbonate, ammonia, or an organic amine. After the completion of the reaction, the concentration of the copolymer may be adjusted, if necessary.

(Enzyme)

The enzyme contained in the composition of the present disclosure is not limited as long as it exhibits cleaning performance, and examples include protease, lipase, phospholipase, hemicellulase, peroxidase, cellulase, xylanase, esterase, cutinase, pectinase, keratanase, reductase, oxidase, phenoloxidase, lipoxygenase, ligninase, pullulanase, tannase, pentosanase, mannanase, β-glucanase, arabinosidase, hyaluronidase, chondroitinase, laccase, amylase, and combinations thereof. Protease and amylase are preferred, and protease is more preferred.

(Surfactant)

Non-limiting examples of the surfactant contained in the composition of the present disclosure include an anionic surfactant, a nonionic surfactant, a cationic surfactant, and an amphoteric surfactant. One or more of these surfactants may be used. Preferably, the composition contains at least one of an anionic surfactant or a nonionic surfactant.

When two or more of these surfactants are used, the total amount of an anionic surfactant and a nonionic surfactant is preferably 5 to 100% by mass based on 100% by mass of all surfactants. The total amount is more preferably 50 to 100% by mass, still more preferably 75 to 100% by mass, particularly preferably 80 to 100% by mass.

The composition of the present disclosure preferably contains an anionic surfactant as a surfactant. However, an anionic surfactant exerts a more significant effect on enzyme activity than other surfactants. Thus, stabilizing the enzyme in the composition containing an anionic surfactant using the copolymer in the present invention is of great technical significance.

The proportion of the anionic surfactant is preferably 10 to 100% by mass based on 100% by mass of all surfactants. The proportion is more preferably 10 to 50% by mass, still more preferably 10 to 45% by mass, particularly preferably 10 to 40% by mass.

Suitable examples of the anionic surfactant include alkylbenzene sulfonates, alkyl ether sulfates, alkenyl ether sulfates, alkyl sulfates, alkenyl sulfates, α-olefin sulfonates, α-sulfonated fatty acid and ester salts thereof, alkanesulfonates, saturated fatty acid salts, unsaturated fatty acid salts, alkyl ether carboxylates, alkenyl ether carboxylates, amino acid-based surfactants, N-acylamino acid-based surfactants, alkyl phosphate esters and salts thereof, and alkenyl phosphate esters and salts thereof.

The alkyl groups and alkenyl groups in these anionic surfactants may each contain an alkyl group such as a methyl group as a branch.

Suitable examples of the nonionic surfactants include polyoxyalkylene alkyl ethers, polyoxyalkylene alkenyl ethers, polyoxyethylene alkyl phenyl ethers, higher fatty acid alkanolamides, adducts of higher fatty acid alkanolamides with alkylene oxide, sucrose fatty acid esters, alkyl glycoxides, fatty acid glycerol monoesters, and alkylamine oxides. The alkyl groups and alkenyl groups in these nonionic surfactants may each contain an alkyl group such as a methyl group as a branch.

Suitable examples of the cationic surfactant include quaternary ammonium salts.

Suitable examples of the amphoteric surfactant include carboxylic amphoteric surfactants and sulfobetaine amphoteric surfactants.

The alkyl groups and alkenyl groups in these cationic surfactants and these amphoteric surfactants may each contain an alkyl group such as a methyl group as a branch.

(Different component)

The composition of the present disclosure may contain components different from the copolymer, enzyme, and surfactant. Non-limiting examples of the different components include detergent builders; anti-soil agents such as benzotriazole and ethylene-thiourea; soil release agents; color transfer inhibitors; fabric softeners; alkaline substances for pH adjustment; fragrances; solubilizing agents; fluorescent agents; colorants; foaming agents; foam stabilizers; glossing agents; bactericides; bleaching agents; bleach activators; dyes; and solvents.

Non-limiting examples of the detergent builders include alkali builders such as carbonates, hydrogencarbonates, and silicates; chelating builders such as tripolyphosphates, pyrophosphates, sodium sulfate decahydrate, nitrilotriacetates, ethylenediaminetetraacetates, citrates, salts of (meth)acrylic acid copolymers, acrylic acid-maleic acid copolymers, fumarates, and zeolites; and carboxyl derivatives of polysaccharides such as carboxymethyl cellulose.

Examples of counter salts used in the detergent builders include alkali metals such as sodium and potassium, and alkaline agents such as sodium hydroxide, ammonium, and amines.

One or more of these different components may be used.

Non-limiting examples of the solvent include water; C1-C8 alcohols such as ethanol, 1-propanol, 2-propanol, 1-butanol, and phenoxyethanol; glycols such as propylene glycol, butylene glycol, and hexylene glycol; polyalkylene glycols such as diethylene glycol, triethylene glycol, tetraethylene glycol, dipropylene glycol, tripropylene glycol, and tetrapropylene glycol; alkyl ethers such as diethylene glycol monomethyl ether, diethylene glycol dimethyl ether, and diethylene glycol monobutyl ether; sulfone, diethyl sulfone, and bis(2-hydroxyethyl) sulfone; sulfoxides (e.g., dimethyl sulfoxide); cyclic ethers (e.g., tetrahydrofuran and tetrahydropyran); nitriles (e.g., acetonitrile, propionitrile, butyronitrile, acrylonitrile, and methacrylonitrile); carbonates (e.g., ethylene carbonate and propylene carbonate); and ketones (e.g., acetone, diethyl ketone, acetophenone, methyl ethyl ketone, cyclohexanone, cyclopentanone, and diacetone alcohol).

When the composition contains a detergent builder, the amount thereof is preferably usually 0.1 to 20% by mass per 100% by mass of the detergent composition. The amount is more preferably 0.2 to 15% by mass, more preferably 0.3 to 10% by mass, still more preferably 0.4 to 8% by mass, particularly preferably 0.5 to 5% by mass.

When the composition is a liquid detergent, the amount of water contained in the liquid detergent is usually preferably 0.1 to 75% by mass based on 100% by mass of the liquid detergent. The amount is more preferably 0.5 to 65% by mass, particularly preferably 1 to 55% by mass.

(Uses of composition of the present disclosure)

The composition of the present disclosure has excellent cleaning power and can be suitably used for detergents or the like. For example, the composition of the present disclosure may be used for detergents for fibers and hard surfaces. The term "detergent" herein refers to domestic detergents for laundry, kitchen, and household cleaning, as well as detergents for textile industry and other industrial detergents.

The composition of the present disclosure is also a detergent composition.

The present invention also encompasses a method for producing a detergent composition, the method including mixing the composition of the present disclosure with a surfactant.

The present invention also encompasses a soil release agent containing the composition of the present disclosure. A soil-release agent is a compound capable of adsorbing onto fibers, and when used to pre-treat fibers,

the soil-release agent facilitates the removal of subsequently adhering stains such as sebum during washing.

The present invention also encompasses a method for using the composition of the present disclosure as a soil release agent.

## EXAMPLES

The present disclosure is described in further detail below with reference to examples, but the present disclosure is not limited to these examples. Unless otherwise specified, "%" means "% by mass."

<Measurement of weight average molecular weight of copolymer>

The weight average molecular weight (Mw) of the copolymer was measured by gel permeation chromatography (GPC).

The following describes the measurement conditions and the apparatus.
Apparatus: EcoSEC HLC-8320GPC available from Tosoh Corporation
Detector: differential refractive index (RI) detector
Column: TSKgel α-M, TSKgel α-2500, available from Tosoh Corporation
Column temperature: 40°C
Flow rate: 0.8 mL/min
Injection volume: 20 μL (prepared eluent with sample concentration of 0.5 wt%)
Calibration curve: polyethylene glycols, Mw = 194, 410, 615, 1020, 1450, 3860, 8160, 16100, 21160, 49930, 67600, 96100, 205500, 542500, 942000, available from GL Sciences Inc.
Calibration curve order: 3
GPC software: EcoSEC-WS available from Tosoh Corporation
Eluent: 0.5 M acetic acid + 0.2 M sodium nitrate/acetonitrile = 50/50 (v/v)

<Evaluation test 1 of cleaning power for protein soils>

(1) Protein-soiled fabric EMPA-117 (available from Swissatest) was subjected to measurement of reflectance (Z value) using a reflectometer (spectrophotometer, available from Nippon Denshoku Industries Co., Ltd., trade name: SE6000).
(2) Pure water was added to 29.5 g of calcium chloride dihydrate and 13.6 g of magnesium chloride hexahydrate to prepare 500 g of a hard water mother liquor (i).
(3) An amount of 15.5 g of sodium bicarbonate, 884.5 g of pure water, and 100 g of a 0.1 M aqueous hydrochloric acid solution were mixed to prepare 1000 g of a basic solution (ii).
(4) An amount of 4 g of the hard water mother liquor (i) and 8 g of the basic solution (ii) were added to 3987 g of pure water, and they were stirred to prepare a cleaning solution (iii).
(5) An amount of 4 g of the hard water mother liquor (i) was added to 3996 g of pure water, and they were stirred to prepare a rinse liquid (iv) for rinsing.
(6) An amount of 240 g of propylene glycol and 60 g of ethanol were mixed to prepare a compatibilizer (v).
(7) An amount of 500 g of the compatibilizer (v) and 1808 g of pure water were added to 2692 g of sodium linear alkylbenzene sulfonate (Neopelex G-65, hereinafter also referred to as LAS, available from Kao Corporation), and they were stirred to prepare an LAS aqueous solution (vi).
(8) An amount of 56.3 g of polyoxyethylene lauryl ether (Emulgen 108, hereinafter also referred to as PAE, available from Kao Corporation), 19.6 g of the compatibilizer (v), and 113 g of pure water were added to 53.6 g of the LAS aqueous solution (vi), and they were stirred to prepare a 30% surfactant solution (vii).
(9) An amount of 8.9 g of Copolymer (1) having a solid content of 33.6% and 0.3 g of protease Progress Uno 101L (available from Novozymes) were added to 90.8 g of the 30% surfactant solution (vii), and they were stirred to prepare a detergent solution (viii).
(10) An amount of 6.3 g of Copolymer (2) having a solid content of 47.1% and 0.3 g of protease Progress Uno 101L (available from Novozymes) were added to 93.4 g of the 30% surfactant solution (vii), and they were stirred to prepare a detergent solution (ix).
(11) An amount of 9 g of pure water was added to the detergent solutions (viii) and (ix) each in an amount of 1 g to prepare detergent solutions (x) and (ix), respectively.
(12) An amount of 994.2 g of the cleaning solution (iii) was added to each of the pots of a Tergot-o-meter (available from

Daiei Kagaku Seiki Mfg. Co., Ltd., trade name: TM-4), and the temperature was adjusted to 15°C. Further, the detergent solutions (x) and (ix) each in an amount of 5.8 g were added to each pot, and the contents were stirred for one minute.

(13) Seven pieces of EMPA-117 were placed in each pot and stirred at 120 ppm for 15 minutes.

(14) The pieces of soiled fabric were removed from each pot, and manually wrung to remove water. The liquid was removed from each pot, 1000 g of the rinse liquid (iv) was added to each pot, the temperature was adjusted to 15°C, and the contents were stirred at 120 rpm for five minutes.

(15) The procedure (14) was repeated again.

(16) The pieces of soiled fabric were dried at room temperature and subjected to measurement of reflectance (Z value) again using the above-described reflectometer (spectrophotometer, available from Nippon Denshoku Industries Co., Ltd., trade name: SE6000), and the detergency was determined using the following equations.

[Math. 1]

$$\text{Value of K}/S = \frac{\left(1-((Z\ value/100)/100)\right)^2}{(2\times(Z\ value/100)/100)}$$

$$\text{Cleaning rate \%} = \frac{(\text{Value of K/S of soiled fabric before cleaning}) - (\text{Value of K/S of soiled fabric after cleaning})}{(\text{Value of K}/S\text{ of soiled fabric before cleaning}) - (\text{Value of K/S of white fabric})}\times 100$$

The higher the value of the detergency, the better the cleaning power.

<Evaluation test 2 of cleaning power for protein soils>

(1) Protein-soiled fabric EMPA-117 (available from Swissatest) was subjected to measurement of reflectance (Z value) using a reflectometer (spectrophotometer, available from Nippon Denshoku Industries Co., Ltd., trade name: SE6000).

(2) Pure water was added to 29.5 g of calcium chloride dihydrate and 13.6 g of magnesium chloride hexahydrate to prepare 500 g of a hard water mother liquor (i).

(3) An amount of 15.5 g of sodium bicarbonate, 884.5 g of pure water, and 100 g of a 0.1 M aqueous hydrochloric acid solution were mixed to prepare 1000 g of a basic solution (ii).

(4) An amount of 4 g of the hard water mother liquor (i) and 8 g of the basic solution (ii) were added to 3987 g of pure water, and they were stirred to prepare a cleaning solution (iii).

(5) An amount of 4 g of the hard water mother liquor (i) was added to 3996 g of pure water, and they were stirred to prepare a rinse liquid (iv) for rinsing.

(6) Ion-exchanged water was added to 0.1 g of protease Progress Uno 101L (available from Novozymes) to adjust the total weight to 10 g. Thus, a 1% enzyme solution (v) was prepared.

(7) Ion-exchanged water was added to 0.308 g of Copolymer 3 having a solid content of 33.6% to adjust the total weight to 1 g. Thus, a 10% copolymer solution (vi) was prepared.

(8) Pure water in an amount of 90 g was added to 10 g of polyoxyethylene (6) lauryl ether (Emulgen 108, hereinafter also referred to as PAE, available from Kao Corporation), and they were stirred to prepare a 10% surfactant solution (vii).

(9) An amount of 0.25 g of the 1% enzyme solution (v), 6.8 g of ion-exchanged water, 0.30 g of the 10% copolymer solution (vi), and 3.0 g of the 10% surfactant solution (vii) were homogenized together to prepare a 10-fold diluted detergent solution (viii).

(10) An amount of 994.2 g of the cleaning solution (iii) was added to each of the pots of a Tergot-o-meter (available from Daiei Kagaku Seiki Mfg. Co., Ltd., trade name: TM-4), and the temperature was adjusted to 15°C. Further, 5.8 g of the detergent solution (viii) was added to each pot, and the contents were stirred for one minute.

(11) Seven pieces of EMPA-117 were placed in each pot and stirred at 120 ppm for 15 minutes.

(12) The pieces of soiled fabric were removed from each pot, and manually wrung to remove water. The liquid was removed from each pot, 1000 g of the rinse liquid (iv) was added to each pot, the temperature was adjusted to 15°C, the pieces of soiled fabric were placed in each pot again, and the contents were stirred at 120 rpm for five minutes.

(13) The procedure (12) was repeated again.

(14) The pieces of soiled fabric were dried at room temperature and subjected to measurement of reflectance (Z value) again using the above-described reflectometer (spectrophotometer, available from Nippon Denshoku Industries Co., Ltd., trade name: SE6000), and the detergency was determined using the following equations.

[Math. 2]

$$\text{Value of K/}S = \frac{(1-((Z\ value/100)/100))^2}{(2\times(Z\ value/100)/100)}$$

$$\text{Cleaning rate \%} = \frac{(\text{Value of K/S of soiled fabric before cleaning}) - (\text{Value of K/S of soiled fabric after cleaning})}{(\text{Value of K/}S\text{ of soiled fabric before cleaning}) - (\text{Value of K/S of white fabric})} \times 100$$

The higher the value of the detergency, the better the cleaning power.

<Evaluation test 3 of cleaning power for protein soils>

(1) Protein-soiled fabric EMPA-117 (available from Swissatest) was subjected to measurement of reflectance (Z value) using a reflectometer (spectrophotometer, available from Nippon Denshoku Industries Co., Ltd., trade name: SE6000).
(2) Ion-exchanged water was added to 0.1 g of protease Progress Uno 101L (available from Novozymes) to adjust the total weight to 10 g. Thus, a 1% enzyme solution (i) was prepared.
(3) Ion-exchanged water was added to 0.627 g of Copolymer 4 having a solid content of 31.9% to adjust the total weight to 1 g. Thus, a 10% copolymer solution (ii) was prepared.
(4) Ion-exchanged water was added to 0.633 g of Copolymer 5 having a solid content of 31.6% to adjust the total weight to 1 g. Thus, a 10% copolymer solution (iii) was prepared.
(5) Ion-exchanged water was added to 0.629 g of Copolymer 6 having a solid content of 31.8% to adjust the total weight to 1 g. Thus, a 10% copolymer solution (iv) was prepared.
(6) Pure water in an amount of 90 g was added to 10 g of polyoxyethylene (6) lauryl ether (Emulgen 108, hereinafter also referred to as PAE, available from Kao Corporation), and they were stirred to prepare a 10% surfactant solution (v).
(7) An amount of 0.25 g of the 1% enzyme solution (i), 6.8 g of ion-exchanged water, 0.30 g of the 10% copolymer solution (ii), (iii), or (iv), and 3.0 g of the 10% surfactant solution (v) were homogenized together. Thus, 10-fold diluted detergent solutions (vi), (vii), and (viii) were prepared.
(8) An amount of 994.2 g of tap water was added to each of the pots of a Tergot-o-meter (available from Daiei Kagaku Seiki Mfg. Co., Ltd., trade name: TM-4), and the temperature was adjusted to 15°C. Further, the 10-fold diluted detergent solutions (vi), (vii), and (viii) each in an amount of 5.8 g were added to each pot, and the contents were stirred for one minute.
(9) Seven pieces of EMPA-117 were placed in each pot and stirred at 120 ppm for 15 minutes.
(10) The pieces of soiled fabric were removed from each pot, and manually wrung to remove water. The liquid was removed from each pot, 1000 g of tap water was added to each pot, the temperature was adjusted to 15°C, the pieces of soiled fabric were placed in each pot again, and the contents were stirred at 120 rpm for five minutes.
(11) The procedure (10) was repeated again.
(12) The pieces of soiled fabric were dried at room temperature and subjected to measurement of reflectance (Z value) again using the above-described reflectometer (spectrophotometer, available from Nippon Denshoku Industries Co., Ltd., trade name: SE6000), and the detergency was determined using the following equations.

[Math. 3]

$$\text{Value of K/}S = \frac{(1-((Z\ value/100)/100))^2}{(2\times(Z\ value/100)/100)}$$

$$\text{Cleaning rate \%} = \frac{(\text{Value of K/S of soiled fabric before cleaning}) - (\text{Value of K/S of soiled fabric after cleaning})}{(\text{Value of K/}S\text{ of soiled fabric before cleaning}) - (\text{Value of K/S of white fabric})} \times 100$$

The higher the value of the detergency, the better the cleaning power.

<Evaluation test 4 of cleaning power including soil release effect>

(Pre-treatment of fabric)

First, 55 g of an aqueous solution containing 1000 ppm of Emulgen 108 (Kao Corporation), 100 ppm (nonvolatile content) of any of the copolymers obtained in the examples, and 8.3 ppm of protease Progress Uno 101L (Novozymes) was prepared using tap water. To the aqueous solution was added 2.7 g of polyester dechine cut into 5 × 5 cm pieces, and the contents were stirred for 10 minutes using a roller shaker. After stirring, the pieces of polyester dechine were dehydrated and air-dried for one day.

(Preparation of soiled fabric)

An oil-containing soiling liquid was prepared by mixing 61.5 g of olive oil, 37 g of oleic acid, 1 g of iron (III) oxide, and 0.5 g of oil red. A 15-μL portion of the soiling liquid was dropped onto each piece of the polymer-pre-treated fabric obtained in the pre-treatment described above, and the pieces of the fabric were left to stand at 40°C for one hour to prepare pieces of soiled fabric.

(Evaluation of cleaning power)

(1) Preparation of aqueous surfactant solution

Emulgen 108 (Kao Corporation) in an amount of 10 g was weighed into a beaker and ion-exchanged water was added thereto to prepare 100 g of a 10% surfactant solution.

(2) Test of cleaning power

A Tergot-o-meter was set to 25°C, 497.5 g of tap water and 0.875 g of the aqueous surfactant solution prepared in the step (1) were added to each pot, and a 1% aqueous copolymer solution was added and mixed so that the copolymer concentration in each pot was 17.5 ppm in terms of nonvolatile content. Thereafter, 0.73 g of protease Progress Uno 101L adjusted to 0.1% with ion-exchanged water was added and mixed. Five pieces of soiled fabric were subjected to measurement of Z value in advance using a spectrophotometer (trade name: SE 7700 available from Nippon Denshoku Industries Co., Ltd.). These five pieces and pieces of bath ratio adjustment fabric in a total amount of 16.7 g were placed in each pot, and washed by stirring at 120 rpm for 10 minutes. The water in each pot was removed, and the pieces of fabrics were rinsed once for three minutes, dehydrated, and air-dried for one day.

After air drying, the Z values of the pieces of soiled fabric after washing were measured again using a spectrophotometer, and the detergency was determined using the following equations.

Based on the obtained detergency, the cleaning power was evaluated according to the following criteria.

+++: The difference in detergency between pieces with polymer addition and pieces without polymer addition is 40% or more.
++: The difference in detergency between pieces with polymer addition and pieces without polymer addition is 20% or more and less than 40%.
+: The difference in detergency between pieces with polymer addition and pieces without polymer addition is 5% or more and less than 20%.
-: The difference in detergency between pieces with polymer addition and pieces without polymer addition is less than 5%.

<Production Example 1>

A glass separable flask equipped with a thermometer, a reflux condenser, and a stirrer was charged with 84.8 g of pure water, nitrogen was introduced at a flow rate of 200 ml/min for 60 minutes with stirring, and the content was heated to 70°C. The nitrogen flow rate was set to 50 ml/min, and the following monomer solution and the following aqueous initiator solution were added dropwise to the polymerization reaction system kept at a constant temperature of 70°C under stirring, through separate dropping nozzles. Here, the monomer solution consists of 48 g of methoxypolyethylene glycol monoacrylate (average number of moles of ethylene oxide added: 23, trade name "AM-230G" available from Shin-Nakamura Chemical Co., Ltd., hereinafter referred to as PGA23E), 12 g of dimethylaminoethyl methacrylate (available from Fujifilm Wako Pure Chemical Industries, Ltd., hereinafter referred to as DAM), 25.9 g of pure water, 4.36 g of acetic acid (available from Fujifilm Wako Pure Chemical Industries, Ltd.), and 0.5 g of 3-mercaptopropionic acid (available from SC Organic Chemical Co, Ltd.), and the aqueous initiator solution consists of 24.4 g of an 8% aqueous solution of 2,2'-azobis(2-methylpropionamidine) dihydrochloride (trade name "V-50", available from Fujifilm Wako Pure Chemical

Industries, Ltd.). Regarding the dropping time, the dropwise additions of the monomer solution and the aqueous initiator solution were started simultaneously, and the monomer solution was added dropwise over 180 minutes, and the aqueous initiator solution was added dropwise over 240 minutes. After completion of the dropwise addition of all the solutions, the reaction solution was kept at 70°C for additional 60 minutes for aging to complete the polymerization. Thereby, Copolymer 1 was obtained.

<Production Example 2>

A glass separable flask equipped with a thermometer, a reflux condenser, and a stirrer was charged with 50 g of ethanol, nitrogen was introduced at a flow rate of 100 ml/min for 60 minutes with stirring, and the content was heated to 70°C. The nitrogen flow rate was set to 50 ml/min, and the following monomer solution and the following aqueous initiator solution were added dropwise to the polymerization reaction system kept at a constant temperature of 70°C under stirring, through separate dropping nozzles. Here, the monomer solution consists of 68.4 g of methoxypolyethylene glycol monomethacrylate (average number of moles of ethylene oxide added: 23, trade name "M-230G" available from Shin-Nakamura Chemical Co., Ltd., hereinafter referred to as PGM23E), 5.36 g of methacrylic acid, 40.5 g of DAM, 37.9 g of ethanol (available from Fujifilm Wako Pure Chemical Industries, Ltd.), 14.7 g of acetic acid (available from Fujifilm Wako Pure Chemical Industries, Ltd.), and 20.3 g of benzyl methacrylate (available from Fujifilm Wako Pure Chemical Industries, Ltd., hereinafter referred to as BnMA), and the aqueous initiator solution consists of 43.2 g of a 6% ethanol solution of 2,2'-azobis(2,4-dimethylvaleronitrile) (trade name "V-65" available from Fujifilm Wako Pure Chemical Industries, Ltd.). Regarding the dropping time, the dropwise additions of the monomer solution and the aqueous initiator solution were started simultaneously, and the monomer solution was added dropwise over 180 minutes, and the aqueous initiator solution was added dropwise over 240 minutes. After completion of the dropwise addition of all the solutions, the reaction solution was kept at 70°C for additional 60 minutes for aging to complete the polymerization. Thereby, Copolymer 2 was obtained.

<Production Example 3>

A glass separable flask equipped with a thermometer, a reflux condenser, and a stirrer was charged with 37.8 g of ion-exchanged water, nitrogen was introduced at a flow rate of 200 ml/min for 60 minutes with stirring, and the content was heated to 70°C. The nitrogen flow rate was set to 50 ml/min, and the following monomer solution and the following aqueous initiator solution were added dropwise to the polymerization reaction system kept at a constant temperature of 70°C under stirring, through separate dropping nozzles. Here, the monomer solution consists of 33.3 g of methoxypolyethylene glycol monomethacrylate (average number of moles of ethylene oxide added: 25, hereinafter also referred to as PGM25E), 2.7 g of methacrylic acid, 9.0 g of DAM, 21.0 g of ion-exchanged water, 3.3 g of acetic acid (available from Fujifilm Wako Pure Chemical Industries, Ltd.), and 0.74 g of mercaptopropionic acid, and the aqueous initiator solution consists of 42.2 g of a 1.5 wt% aqueous solution of 2,2'-azobis(2-methylpropionamidine) dihydrochloride (trade name "V-50" available from Fujifilm Wako Pure Chemical Industries, Ltd.). Regarding the dropping time, the dropwise additions of the monomer solution and the aqueous initiator solution were started simultaneously, and the monomer solution was added dropwise over 180 minutes, and the aqueous initiator solution was added dropwise over 240 minutes. After completion of the dropwise addition of all the solutions, the reaction solution was kept at 70°C for additional 60 minutes for aging to complete the polymerization. Thereby, Copolymer 3 was obtained.

<Production Example 4>

A glass separable flask equipped with a thermometer, a reflux condenser, and a stirrer was charged with 60.6 g of pure water, nitrogen was introduced at a flow rate of 200 ml/min for 60 minutes with stirring, and the content was heated to 70°C. The nitrogen flow rate was set to 50 ml/min, and the following monomer solution and the following aqueous initiator solution were added dropwise to the polymerization reaction system kept at a constant temperature of 70°C under stirring, through separate dropping nozzles. Here, the monomer solution consists of 48 g of methoxypolyethylene glycol monomethacrylate (average number of moles of ethylene oxide added: 23, trade name "M-230G" available from Shin-Nakamura Chemical Co., Ltd., hereinafter referred to as PGM23E), 12 g of dimethylaminoethyl methacrylate (available from Fujifilm Wako Pure Chemical Industries, Ltd., hereinafter referred to as DAM), 25.9 g of pure water, 4.35 g of acetic acid (available from Fujifilm Wako Pure Chemical Industries, Ltd.), and 0.5 g of 3-mercaptopropionic acid (available from SC Organic Chemical Industries, Ltd.), and the aqueous initiator solution consists of 46.6 g of a 4% aqueous solution of 2,2'-azobis(2-methylpropionamidine) dihydrochloride (trade name "V-50" available from Fujifilm Wako Pure Chemical Industries, Ltd.). Regarding the dropping time, the dropwise additions of the monomer solution and the aqueous initiator solution were started simultaneously, and the monomer solution was added dropwise over 180 minutes, and the aqueous initiator solution was added dropwise over 240 minutes. After completion of the dropwise addition of all the solutions, the

reaction solution was kept at 70°C for additional 60 minutes for aging to complete the polymerization. Thereby, Copolymer 4 was obtained.

<Production Example 5>

A glass separable flask equipped with a thermometer, a reflux condenser, and a stirrer was charged with 76.3 g of pure water, nitrogen was introduced at a flow rate of 200 ml/min for 60 minutes with stirring, and the content was heated to 70°C. The nitrogen flow rate was set to 50 ml/min, and the following monomer solution and the following aqueous initiator solution were added dropwise to the polymerization reaction system kept at a constant temperature of 70°C under stirring, through separate dropping nozzles. Here, the monomer solution consists of 54 g of methoxypolyethylene glycol monomethacrylate (average number of moles of ethylene oxide added: 23, trade name "M-230G" available from Shin-Nakamura Chemical Co., Ltd., hereinafter referred to as PGM23E), 6 g of dimethylaminoethyl methacrylate (available from Fujifilm Wako Pure Chemical Industries, Ltd., hereinafter referred to as DAM), 25.9 g of pure water, 2.18 g of acetic acid (available from Fujifilm Wako Pure Chemical Industries, Ltd.), and 0.4 g of 3-mercaptopropionic acid (available from SC Organic Chemical Industries, Ltd.), and the aqueous initiator solution consists of 35.3 g of a 4% aqueous solution of 2,2'-azobis(2-methylpropionamidine) dihydrochloride (trade name "V-50" available from Fujifilm Wako Pure Chemical Industries, Ltd.). Regarding the dropping time, the dropwise additions of the monomer solution and the aqueous initiator solution were started simultaneously, and the monomer solution was added dropwise over 180 minutes, and the aqueous initiator solution was added dropwise over 240 minutes. After completion of the dropwise addition of all the solutions, the reaction solution was kept at 70°C for additional 60 minutes for aging to complete the polymerization. Thereby, Copolymer 5 was obtained.

<Production Example 6>

A glass separable flask equipped with a thermometer, a reflux condenser, and a stirrer was charged with 84.2 g of pure water, nitrogen was introduced at a flow rate of 200 ml/min for 60 minutes with stirring, and the content was heated to 70°C. The nitrogen flow rate was set to 50 ml/min, and the following monomer solution and the following aqueous initiator solution were added dropwise to the polymerization reaction system kept at a constant temperature of 70°C under stirring, through separate dropping nozzles. Here, the monomer solution consists of 57 g of methoxypolyethylene glycol monomethacrylate (average number of moles of ethylene oxide added: 23, trade name "M-230G" available from Shin-Nakamura Chemical Co., Ltd., hereinafter referred to as PGM23E), 3.0 g of dimethylaminoethyl methacrylate (available from Fujifilm Wako Pure Chemical Industries, Ltd., hereinafter referred to as DAM), 25.8 g of pure water, 1.09 g of acetic acid (available from Fujifilm Wako Pure Chemical Industries, Ltd.), and 0.3 g of 3-mercaptopropionic acid (available from SC Organic Chemical Industries, Ltd.), and the aqueous initiator solution consists of 28.6 g of a 4% aqueous solution of 2,2'-azobis(2-methylpropionamidine) dihydrochloride (trade name "V-50" available from Fujifilm Wako Pure Chemical Industries, Ltd.). Regarding the dropping time, the dropwise additions of the monomer solution and the aqueous initiator solution were started simultaneously, and the monomer solution was added dropwise over 180 minutes, and the aqueous initiator solution was added dropwise over 240 minutes. After completion of the dropwise addition of all the solutions, the reaction solution was kept at 70°C for additional 60 minutes for aging to complete the polymerization. Thereby, Copolymer 6 was obtained.

<Production Example 7>

A glass separable flask equipped with a thermometer, a reflux condenser, and a stirrer was charged with 53.1 g of ethanol, nitrogen was introduced at a flow rate of 200 ml/min for 60 minutes with stirring, and the content was heated to 70°C. The nitrogen flow rate was set to 50 ml/min, and the following monomer solution and the following aqueous initiator solution were added dropwise to the polymerization reaction system kept at a constant temperature of 70°C under stirring, through separate dropping nozzles. Here, the monomer solution consists of 56.0 g of PGM25E, 4.7 g of methacrylic acid, 27.0 g of DAM, 36.6 g of ethanol, 9.8 g of acetic acid, and 47.3 g of BnMA, and the aqueous initiator solution consists of 50.4 g of a 4% ethanol solution of V-65. Regarding the dropping time, the dropwise additions of the monomer solution and the aqueous initiator solution were started simultaneously, and the monomer solution was added dropwise over 180 minutes, and the aqueous initiator solution was added dropwise over 240 minutes. After completion of the dropwise addition of all the solutions, the reaction solution was kept at 70°C for additional 60 minutes for aging to complete the polymerization. Thereby, Copolymer 7 was obtained.

<Production Example 8>

A glass separable flask equipped with a thermometer, a reflux condenser, and a stirrer was charged with 58.5 g of

ethanol, nitrogen was introduced at a flow rate of 200 ml/min for 60 minutes with stirring, and the content was heated to 70°C. The nitrogen flow rate was set to 50 ml/min, and the following monomer solution and the following aqueous initiator solution were added dropwise to the polymerization reaction system kept at a constant temperature of 70°C under stirring, through separate dropping nozzles. Here, the monomer solution consists of 93.0 g of PGM23E, 7.8 g of methacrylic acid, 28.8 g of DAM, 66.2 g of ethanol, 10.5 g of acetic acid, and 14.4 g of BnMA, and the aqueous initiator solution consists of 40.9 g of a 4% ethanol solution of V-65. Regarding the dropping time, the dropwise additions of the monomer solution and the aqueous initiator solution were started simultaneously, and the monomer solution was added dropwise over 180 minutes, and the aqueous initiator solution was added dropwise over 240 minutes. After completion of the dropwise addition of all the solutions, the reaction solution was kept at 70°C for additional 60 minutes for aging to complete the polymerization. Thereby, Copolymer 8 was obtained.

<Production Example 9>

A glass separable flask equipped with a thermometer, a reflux condenser, and a stirrer was charged with 60.7 g of ethanol, nitrogen was introduced at a flow rate of 200 ml/min for 60 minutes with stirring, and the content was heated to 70°C. The nitrogen flow rate was set to 50 ml/min, and the following monomer solution and the following aqueous initiator solution were added dropwise to the polymerization reaction system kept at a constant temperature of 70°C under stirring, through separate dropping nozzles. Here, the monomer solution consists of 47.3 g of PGM25E, 4.0 g of methacrylic acid, 50.0 g of DAM, 38.6 g of ethanol, 18.1 g of acetic acid, and 33.8 g of BnMA, and the aqueous initiator solution consists of 34.5 g of a 6 ethanol solution of V-65. Regarding the dropping time, the dropwise additions of the monomer solution and the aqueous initiator solution were started simultaneously, and the monomer solution was added dropwise over 180 minutes, and the aqueous initiator solution was added dropwise over 240 minutes. After completion of the dropwise addition of all the solutions, the reaction solution was kept at 70°C for additional 60 minutes for aging to complete the polymerization. Thereby, Copolymer 9 was obtained.

Table 1 shows the amounts (% by mass) of the monomers used in Production Examples 1 to 9 and the weight average molecular weights of Copolymers 1 to 9.

[Table 1]

| | % by mass | | | | | | Mw |
|---|---|---|---|---|---|---|---|
| | DAM | PGA23E | PGM23E | PGM25E | BzMA | MAA | |
| Copolymer 1 | 20 | 80 | | | | | 16000 |
| Copolymer 2 | 30 | | 51 | | 15 | 4 | 25000 |
| Copolymer 3 | 20 | | | 74 | | 6 | 10500 |
| Copolymer 4 | 20 | | 80 | | | | 17000 |
| Copolymer 5 | 10 | | 90 | | | | 15000 |
| Copolymer 6 | 5 | | 95 | | | | 15000 |
| Copolymer 7 | 20 | | | 35 | 42 | 4 | 25500 |
| Copolymer 8 | 20 | | 65 | | 10 | 5 | 26500 |
| Copolymer 9 | 37 | | | 35 | 25 | 3 | 27000 |

For Examples 1 and 2 using Copolymers 1 and 2 and Comparative Example 1 using no copolymer, the test 1 of cleaning power for protein soils was performed. Table 2 shows the results.

[Table 2]

| | Copolymer | Detergency |
|---|---|---|
| Comparative Example 1 | None | 67.7% |
| Example 1 | Copolymer 1 | 72.1% |
| Example 2 | Copolymer 2 | 72.6% |

For Example 3 using Copolymer 3 and Comparative Example 2 using no copolymer, the test 2 of cleaning power for protein soils was performed. Table 3 shows the results.

[Table 3]

| | Copolymer | Detergency |
|---|---|---|
| Comparative Example 2 | None | 56.3% |
| Example 3 | Copolymer 3 | 58.3% |

For Examples 4, 5, and 6 using Copolymers 4, 5, and 6 and Comparative Example 3 using no copolymer, the test 3 of cleaning power for protein soils was performed. Table 4 shows the results.

[Table 4]

| | Copolymer | Detergencv |
|---|---|---|
| Comparative Example 3 | None | 79.1% |
| Example 4 | Copolymer 4 | 82.9% |
| Example 5 | Copolymer 5 | 83.5% |
| Example 6 | Copolymer 6 | 83.3% |

For Examples 7 and 8 using Copolymers 7 and 8 instead of Copolymers 4, 5, and 6 and Comparative Example 4 using no copolymer, the test 3 of cleaning power for protein soils was performed. Table 5 shows the results.

[Table 5]

| | Copolymer | Detergency |
|---|---|---|
| Comparative Example 4 | None | 83.0% |
| Example 7 | Copolymer 7 | 84.7% |
| Example 8 | Copolymer 8 | 85.5% |

For Examples 9, 10, and 11 using Copolymers 3, 4, and 9 and Comparative Example 5 using no copolymer, the evaluation test 4 of cleaning power including soil release effect was performed. Table 6 shows the results.

[Table 6]

| | Copolymer | Detergency |
|---|---|---|
| Comparative Example 5 | None | - |
| Example 9 | Copolymer 3 | ++ |
| Example 10 | Copolymer 4 | +++ |
| Example 11 | Copolymer 9 | ++ |

## Claims

**1.** A composition comprising:

an amino group-containing copolymer comprising a structural unit (a) derived from an amino group-containing monomer and a structural unit (b) derived from a polyalkylene glycol chain-containing monomer; and
an enzyme,
the structural unit (a) being represented by the following formula (1):

[Chem. 1]

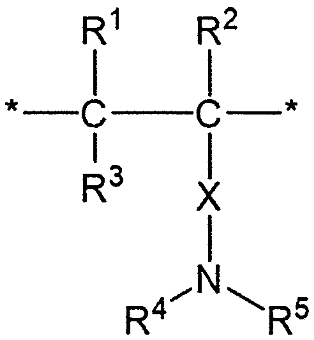

Formula (1)

wherein $R^1$, $R^2$, and $R^3$ each independently represent a hydrogen atom or a C1-C5 alkyl group; $R^4$ and $R^5$ each independently represent a hydrogen atom or a C1-C12 organic group; X represents a divalent linking group; and each of asterisks represents an atom, in another structural unit, to which the structural unit represented by the formula (1) is bonded, with the another structural unit being the same as or different from the structural unit represented by the formula (1).

**2.** The composition according to claim 1, further comprising a surfactant.

**3.** The composition according to claim 1 or 2,
wherein the amino group-containing copolymer further comprises a structural unit (c) derived from a hydrophobic group-containing monomer.

**4.** The composition according to any one of claims 1 to 3,
wherein the amino group-containing copolymer further comprises a structural unit (d) derived from an unsaturated carboxylic acid.

**5.** The composition according to any one of claims 1 to 4,
wherein the amino group-containing copolymer contains the structural unit (a) in an amount of 2% by mass or more and 50% by mass or less based on 100% by mass of all structural units.

**6.** The composition according to any one of claims 1 to 5,
wherein the amino group-containing copolymer contains the structural unit (b) in an amount of 5% by mass or more and 98% by mass or less based on 100% by mass of all structural units.

**7.** The composition according to any one of claims 1 to 6,
wherein the amino group-containing copolymer contains the structural unit (c) in an amount of 0% by mass or more and 50% by mass or less based on 100% by mass of all structural units.

**8.** The composition according to any one of claims 1 to 7,
wherein the amino group-containing copolymer contains the structural unit (d) in an amount of 0% by mass or more and 20% by mass or less based on 100% by mass of all structural units.

**9.** The composition according to any one of claims 1 to 8,
wherein the amino group-containing copolymer has a weight average molecular weight of 4000 or more and 500000 or less.

**10.** The composition according to any one of claims 1 to 9,
wherein the composition contains the enzyme in a proportion of 0.01 to 10% by mass based on 100% by mass of the composition.

## INTERNATIONAL SEARCH REPORT

International application No. **PCT/JP2024/019735**

### A. CLASSIFICATION OF SUBJECT MATTER

***C11D 3/37***(2006.01)i; ***C08F 216/14***(2006.01)i; ***C08F 220/12***(2006.01)i; ***C08F 220/34***(2006.01)i; ***C08L 33/00***(2006.01)i; ***C11D 3/386***(2006.01)i
FI: C11D3/37; C11D3/386; C08F220/12; C08F216/14; C08L33/00; C08F220/34

According to International Patent Classification (IPC) or to both national classification and IPC

### B. FIELDS SEARCHED

Minimum documentation searched (classification system followed by classification symbols)

C11D3/37; C08F216/14; C08F220/12; C08F220/34; C08L33/00; C11D3/386

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2002-256030 A (LION CORPORATION) 11 September 2002 (2002-09-11) claims, paragraphs [0035]-[0052], examples, etc. | 1-10 |
| X<br>A | JP 11-246894 A (SHISEIDO COMPANY, LTD.) 14 September 1999 (1999-09-14) claims, paragraphs [0119]-[0144], examples, etc. | 1-3, 5-10<br>4 |
| X<br>A | WO 2005/111102 A1 (LION CORPORATION) 24 November 2005 (2005-11-24) claims, paragraphs [0049]-[0075], examples 26-43, 47-62, 66, etc. | 1-3, 5-10<br>4 |
| X | JP 2003-252934 A (LION CORPORATION) 10 September 2003 (2003-09-10) claims, paragraphs [0023], [0033], [0044]-[0072], examples 13-14, 19-20, 22-23, 25-28, 30-31, 33-34, etc. | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/019735

C. DOCUMENTS CONSIDERED TO BE RELEVANT

| Category* | Citation of document, with indication, where appropriate, of the relevant passages | Relevant to claim No. |
|---|---|---|
| X | JP 2007-39661 A (LION CORPORATION) 15 February 2007 (2007-02-15) claims, paragraphs [0028], [0037], [0043]-[0063], examples 6-8, 10, 16-17, 19, 21, 23-39, etc. | 1-10 |
| X | JP 2008-144316 A (KAO CORPORATION) 26 June 2008 (2008-06-26) claims, paragraphs [0029], [0063], [0066]-[0101], example 6, etc. | 1-10 |
| X | JP 2013-170183 A (GOO CHEMICAL CO., LTD.) 02 September 2013 (2013-09-02) claims, paragraphs [0074]-[0075], [0080]-[0108], examples 5, 10, etc. | 1-10 |
| X | JP 2013-155217 A (GOO CHEMICAL CO., LTD.) 15 August 2013 (2013-08-15) claims, paragraphs [0074], [0094], [0097]-[0118], examples 1, 4-5, etc. | 1-10 |
| X | JP 2011-190368 A (LION CORPORATION) 29 September 2011 (2011-09-29) claims, paragraphs [0026], [0053], [0057]-[0108], examples, etc. | 1-10 |
| X<br>A | WO 2023/064749 A1 (THE PROCTER & GAMBLE COMPANY) 20 April 2023 (2023-04-20) claims, p. 2, line 5 to p. 3, line 17, pp. 50-53, examples, etc. | 1-2, 5-10<br>3-4 |

Form PCT/ISA/210 (second sheet) (July 2022)

**INTERNATIONAL SEARCH REPORT**
**Information on patent family members**

International application No.
**PCT/JP2024/019735**

| Patent document cited in search report | Publication date (day/month/year) | Patent family member(s) | Publication date (day/month/year) |
| --- | --- | --- | --- |
| JP 2002-256030 A | 11 September 2002 | (Family: none) | |
| JP 11-246894 A | 14 September 1999 | (Family: none) | |
| WO 2005/111102 A1 | 24 November 2005 | TW 200536867 A | |
| JP 2003-252934 A | 10 September 2003 | (Family: none) | |
| JP 2007-39661 A | 15 February 2007 | (Family: none) | |
| JP 2008-144316 A | 26 June 2008 | US 2010/0017970 A1<br>claims, paragraphs [0059], [0095], [0098]-[0250], examples 1-6, etc.<br>WO 2008/072780 A1<br>EP 2093323 A1 | |
| JP 2013-170183 A | 02 September 2013 | (Family: none) | |
| JP 2013-155217 A | 15 August 2013 | (Family: none) | |
| JP 2011-190368 A | 29 September 2011 | (Family: none) | |
| WO 2023/064749 A1 | 20 April 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 109135960 A


### Non-patent literature cited in the description


- *POLYMER ENGINEERING AND SCIENCE*, 1974, vol. 14 (2), 147-154